**Europäisches Patentamt**

**European Patent Office**

**Office européen des brevets**

(11) Veröffentlichungsnummer: **0 210 549**
**A2**

## (12) EUROPÄISCHE PATENTANMELDUNG

(21) Anmeldenummer: 86109808.5

(22) Anmeldetag: 17.07.86

(51) Int. Cl.⁴: **B23P 19/08**

(30) Priorität: 20.07.85 DE 3526081
26.07.85 DE 3526768

(43) Veröffentlichungstag der Anmeldung:
04.02.87 Patentblatt 87/06

(84) Benannte Vertragsstaaten:
AT BE CH DE FR GB IT LI LU NL SE

(71) Anmelder: **Kumeth, Siegmund**
**Bayreuther Strasse 37**
**D-8450 Amberg(DE)**

(72) Erfinder: **Kumeth, Siegmund**
**Bayreuther Strasse 37**
**D-8450 Amberg(DE)**

(74) Vertreter: **Graf, Helmut, Dipl.-Ing. et al**
**Patentanwälte Dipl.-Ing. A. Wasmeier**
**Dipl.-Ing. H. Graf Greflinger Strasse 7**
**Postfach 382**
**D-8400 Regensburg(DE)**

(54) **Vorrichtung zum Aufbringen von O-Ringen auf Werkstücke.**

(57) Bei einer Vorrichtung zum Aufbringen von O-Ringen auf insbesondere zylindrische Werkstücke ist ein Spreizwerkzeug vorgesehen, welches mit wenigstens drei Spreizelementen einen O-Ring erfaßt und diesen aufspreizt. Weiterhin ist ein Übergabewerkzeug mit einem Aufnahmeelement vorgesehen, welches am Ende Anlageflächen für die innere Ringfläche eines O-Ringes bildende Segmente aufweist, so daß der mit dem Spreizwerkzeug aufgespreizte O-Ring auf diese Segmente des Übergabewerkzeugs übergeben werden kann. Das Aufnahmeelement des Übergabewerkzeugs ist auf das Werkstück aufschiebbar und mit einem relativ zum Aufnahmeelement verschiebbaren Schieber ist der O-Ring auf das Werkstück aufschiebbar.

EP 0 210 549 A2

Fig.8

## Vorrichtung zum Aufbringen von O-Ringen auf Werkstücke

Die Erfindung bezieht sich auf eine Vorrichtung zum Aufbringen von O-Ringen auf Werkstücke, insbesondere zylindrische Werkstücke entsprechend dem Oberbegriff Patentanspruch 1.

Bei der Herstellung von Geräten oder Geräteteilen ist es vielfach erforderlich, O-Ringe, die in der Regel als Dichtungsringe verwendet werden und die aus Gummi oder anderem elastischen Material bestehen, auf Werkstücke aufzubringen. Damit diese Ringe ihre spätere Funktion - (beispielsweise als Dichtungsringe) zuverlässig erfüllen können, ist es erforderlich, die Ringe möglichst schonend aufzubringen, d.h. vor allem auch eine Überdehnung der Ringe beim Aufbringen zu vermeiden.

Zu beachten ist bei dem Aufbringen von O-Ringen auf Werkstücke vor allem auch, daß sich diese Ringe beim Aufschieben auf das Werkstück an der Oberfläche dieses Werkstückes nicht abrollen.

Bisher sind keine Vorrichtungen auf dem Markt erhältlich, die ein automatisiertes und schonendes Aufbringen von O-Ringen auf Werkstücke und dabei insbesondere auch ein Aufbringen gestatten, ohne daß hierbei gleichzeitig ein Abrollen der O-Ringe an der Oberfläche des Werkstückes beim Aufschieben bzw. Aufbringen erfolgt.

Der Erfindung liegt die Aufgabe zugrunde, eine Vorrichtung aufzuzeigen, die ein automatisches, - schonendes Aufbringen von O-Ringen auf Werkstücke ermöglicht, wobei gleichzeitig wirksam verhindert ist, daß sich die O-Ringe beim Aufbringen bzw. Aufschieben an der Oberfläche des betreffenden Werkstückes abrollen.

Zur Lösung dieser Aufgabe ist eine Vorrichtung entsprechend dem kennzeichnenden Teil des Patentanspruches 1 ausgebildet.

Der auf ein Werkstück aufzubringende O-Ring wird zunächst dem Spreizwerkzeug, welches zusammen mit dem Übergabewerkzeug die beiden wesentlichen Funktionselemente der Vorrichtung bildet, zugeführt, und zwar derart, daß die in Ruhestellung befindlichen Spreizelemente mit ihren Anlageflächen in der Öffnung des O-Ringes liegen. Anschließend werden die Spreizelemente in ihre Arbeitsstellung bewegt, wodurch der an den ersten Anlageflächen der Spreizelemente anliegende O-Ring durch elastische Verformung seines Materials gedehnt wird, allerdings nicht über ein zulässiges bzw. die Elastizitätgrenzen überschreitendes Maß hinaus. Der so gedehnte O-Ring wird dann an das Übergabewerkzeug übergeben, und zwar in der Weise, daß die Innenfläche des weiterhin gedehnten O-Ringes gegen die von den Segmenten des Aufnahmeelementes des Übergabewerkzeugs gebildeten zweiten Anlageflächen anliegt. Die Übergabe erfolgt dabei damit, daß nach dem Spreizen des O-Ringes durch die Spreizelemente das Spreizwerkzeug sowie das Übergabewerkzeug in Richtung der ersten bzw. zweiten Achse so ineinander geführt werden, daß jede erste Anlagefläche der in Arbeitsstellung befindlichen Spreizelemente des Spreizwerkzeuges zwischen zwei benachbarten Segmenten des Aufnahmeelementes des Übergabewerkzeuges liegt, wobei in dieser, die Übergabesituation kennzeichnenden Positionierung (zweite Position) des Spreizwerkzeuges und des Übergabewerkzeuges die zweiten Anlageflächen vorzugsweise etwas radial innerhalb der ersten Anlageflächen liegen, so daß ein Einführen der Segmente des Übergabewerkzeuges bzw. der von diesen Segmenten gebildeten zweiten Anlageflächen in die Öffnung des gespreizten O-Ringes ohne Berührung mit diesem Ring möglich ist. Durch Rückführen der Spreizelemente bzw. der von diesen gebildeten ersten Anlageflächen in die Ruhestellung wird der O-Ring dann auf das Aufnahmeelement aufgesetzt und zwar in unmittelbarer Nähe des Endes dieses Elementes.

Für die endgültige Übertragung des O-Ringes auf das Werkstück, wird das Aufnahmeelement auf dieses Werkstück aufgeschoben oder umgekehrt das Werkstück in das Aufnahmeelement eingeschoben, und zwar in beiden Fällen jeweils so, daß das Ende des Aufnahmeelementes unmittelbar der Stelle des Werkstückes benachbart liegt, auf der - (Stelle) der O-Ring aufgesetzt werden soll. Mit Hilfe des am Aufnahmeelement vorgesehenen Schiebers wird dann der O-Ring von dem Aufnahmeelement heruntergedrückt, wobei der O-Ring hierbei lediglich über die Kante am Ende des Aufnahmeelementes auf das Werkstück springt, sich also auch bei dieser Übertragung nicht auf einer Oberfläche abwälzen bzw. abrollen kann.

Die erfindungsgemäße Vorrichtung hat vor allem auch den Vorteil, daß das Aufnahmeelement bzw. der die Segmente aufweisende Teil dieses Aufnahmeelementes sehr dünnwandig ausgebildet werden kann, da dem Aufnahmeelement die durch das Spreizwerkzeug bereits gespreizten bzw. gedehnten O-Ringe zugeführt werden. Durch die dünnwandige Ausbildung des Aufnahmeelementes ist es vor allem möglich, die für das Aufbringen eines O-Ringes auf ein Werkstück notwendige Dehnung kleinzuhalten.

Weiterbildungen der Erfindung sind Gegenstand der Unteransprüche.

Die Erfindung wird im folgenden anhand der Figuren an einem Ausführungsbeispiel näher erläutert. Es zeigen:

Fig. 1 in schematischer Darstellung und in Seitenansicht zwei als schwenkbare Spreizarme ausgebildete Spreizelemente des Spreizwerkzeugs einer Vorrichtung gemäß der Erfindung, bei in Ruhestellung befindlichen Spreizarmen;

Fig. 2 in schematischer Darstellung eine Draufsicht, auf das obere, die Anlageflächen des Spreizelementes bildende Ende der Spreizarme des Spreizelementes, bei in Ruhestellung befindlichen Spreizarmen;

Fig. 3 und 4 ähnliche Darstellungen wie die Figuren 1 und 2, jedoch bei in Arbeitsstellung befindlichen Spreizarmen; .

Fig. 5 in schematischer Darstellung und in Längsschnitt das Aufnahmeelement des Übergabewerkzeugs, zusammen mit einer - schematischen Darstellung des Spreizwerkzeuges während der Übergabe eines durch die Spreizarme gespreizten O-Ringes an das Aufnahmeelement des Übergabewerkzeuges (Übergabesituation);

Fig. 6 das Aufnahmeelement des Übergabewerkzeugs von dem in der Fig. 5 unteren Ende her gesehen;

Fig. 7 in ähnlicher Darstellung wie Fig. 5 das Aufnahmeelement des Übergabewerkzeugs, jedoch bei auf ein Werkstück aufgeschobenem Aufnahmeelement, kurz nach dem Aufbringen eines O-Ringes auf das als Welle ausgebildete Werkstück;

Fig. 8 einen Längsschnitt durch das Spreizwerkzeug sowie durch das Übergabewerkzeug in Übergabesituation;

Fig. 9 in Einzeldarstellung und in Seitenansicht das mit einem O-Ring versehene Werkstück;

Fig. 10 in ähnlicher Darstellung wie Fig. 5 das Spreizwerkzeug sowie das Übergabewerkzeug der Vorrichtung gemäß Fig. 8, jedoch bei nicht abgeschrägter Anlagefläche des Schiebers.

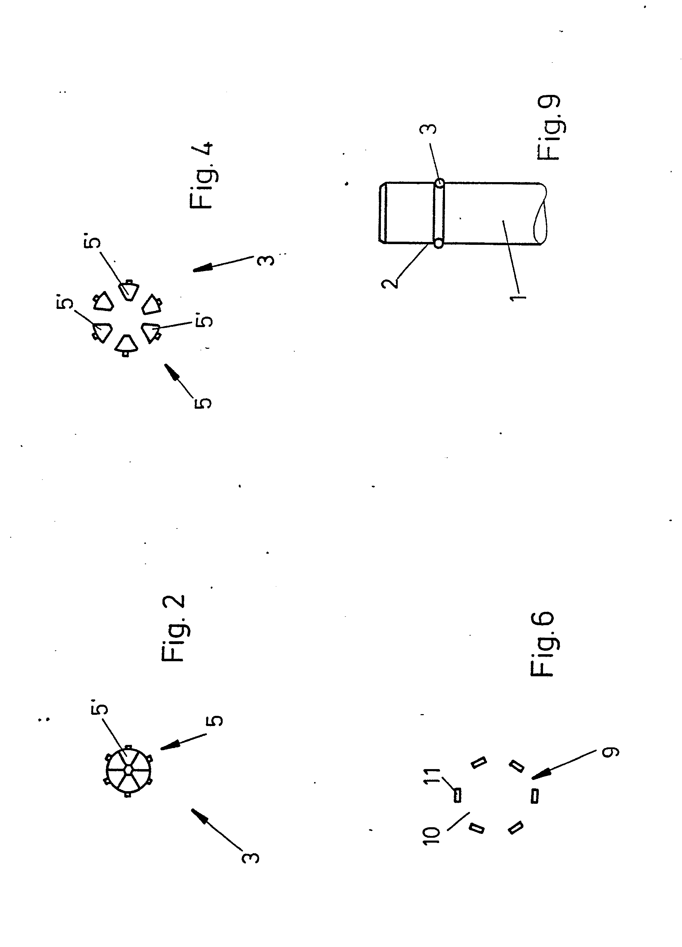

In den Figuren ist 1 ein Werkstück in Form einer Welle, auf welche (Welle) ein beispielsweise als Dichtung dienender O-Ring 2 aus Gummi oder gummiähnlichem Material so aufgebracht werden soll, daß dieser O-Ring nach dem Aufbringen mit seiner Achse achsgleich mit der Achse der Welle 1 liegt und teilweise von einer in der Umfangsfläche der Welle 1 vorgesehenen ringförmigen Nut aufgenommen ist, wie des in der Fig. 9 dargestellt ist.

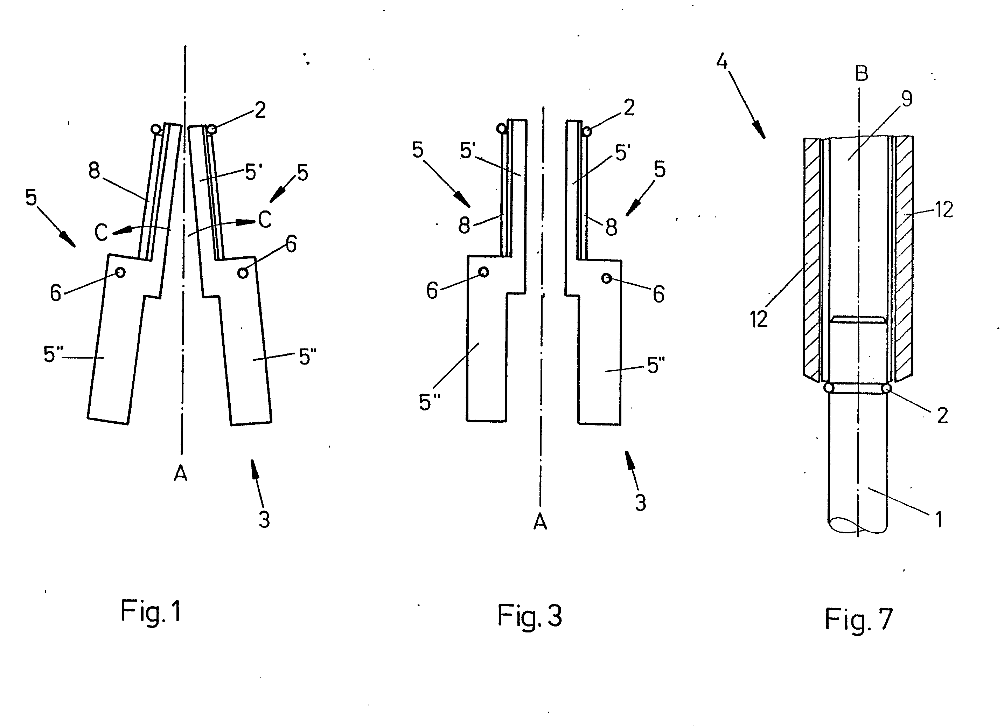

Zum Aufbringen des O-Ringes 2 auf die Welle 1 dient eine Vorrichtung, die im wesentlichen aus einem Spreizwerkzeug 3 und einem Übergabewerkzeug 4 (Fig. 8) besteht. Die wesentlichen Elemente dieser Werkzeuge und deren Funktion sind in den Figuren 1 bis 7 dargestellt.

Das Spreizwerkzeug 3 weist bei der dargestellten Ausführungsform sechs Spreizarme 5 auf, die um eine Achse A gleichmäßig verteilt angeordnet sind und mit ihrer Längserstreckung in Richtung dieser Achse liegen. Jeder Spreizarm 5 ist in seinem mittleren Bereich mit Hilfe eines Gelenkstiftes 6 in einem für alle Spreizarme 5 gemeinsamen Tragelement 7 (Fig. 8) schwenkbar gelagert, wobei die Achse des Gelenkstiftes 6 jedes Spreizarmes 5 senkrecht zur Achse A sowie senkrecht zu einer radial zu dieser Achse verlaufenden Linie liegt.

Die in den Figuren 1 und 3 oberhalb des Gelenkstiftes 6 liegenden Längen 5' der Spreizarme 5 sind an ihrer Außenfläche konvex bzw. kreisbogenförmig derart gekrümmt, daß diese Außenflächen sämtlicher Spreizarme bzw. Längen 5' bei in Arbeitsstellung befindlichem Spreizwerkzeug 3 bzw. Spreizarmen 5 (Fig. 3 und 4) auf einer konzentrisch zur Achse A verlaufenden gemeinsamen Kreislinie liegen. An den konvex gekrümmten Außenflächen sind die Spreizarme 5 im Bereich der Länge 5' weiterhin mit einem stegartigen Vorsprung 8 versehen, der sich in Richtung der Längserstreckung des zugehörigen Spreizarmes 5 bzw. dessen Länge 5' erstreckt, wobei jeder Vorsprung 8 mit seinem in den Fig. 1 und 3 oberen Ende mit Abstand von dem dortigen oberen Ende der Länge 5' des zugehörigen Spreizarmes 5 endet und damit eine vertikale Ablagefläche für den von den Spreizarmen 5 erfaßten bzw. gespreizten O-Ring 2 bilden. Der in den Fig. 1 und 3 obere und von dem Vorsprung 8 freie Bereich der konvex gekrümmten Außenfläche jedes Spreizarmes 5 bzw. dessen Länge 5' bildet eine Anlagefläche, gegen die der von dem Spreizwerkzeug aufgenommene bzw. gespreizte O-Ring 2 mit seiner Innenfläche anliegt.

Das Übergabewerkzeug besitzt ein Aufnahmeelement 9, welches als dünnwandiges Rohrstück mit einer kreisförmigen Außen- bzw. Umfangsfläche und mit einer ebenfalls kreisförmigen Innenfläche ausgebildet ist. An seiner Außenfläche weist das Aufnahmeelement 9 einen Querschnitt auf, der in etwa gleich bzw. geringfügig kleiner ist als der Durchmesser der Kreislinie, auf . der die Außenflächen der oberen Enden der Spreizarme 5, d.h. die Anlageflächen dieser Spreizarme bei in Arbeitsstellung befindlichen Spreizarmen angeordnet sind.

Weiterhin ist das Aufnahmeelement an einem Ende, d.h. bei der für die Fig. 5 gewählten Darstellung an dem unteren Ende mit in Richtung der Achse B dieses Elementes verlaufenden Ausnehmungen 10 versehen, die zu diesem Ende des Aufnahmeelementes hin offen sind. Die Anzahl der Ausnehmungen 10 ist dabei so gewählt, daß an dem unteren Ende des Aufnahmeelementes zwischen den Ausnehmungen sechs jeweils von der Umfangswandung eines Hohlzylinders, dh. von dem jeweils verbleibenden Teil der Umfangswand des rohrartigen Aufnahmeelementes gebildete Segmente 11 entstehen, die in ihrer Gesamtheit mit ihrer Außenfläche eine im Bereich der Ausnehmungen 10 unterbrochene ringförmige Anlagefläche bilden, gegen die der an das Übergabeelement übergebene O-Ring 2 mit seiner Innenfläche anliegt. Durch die Ausnehmungen und 10 und die Segmente 11 ist das Aufnahmeelement an seinem unteren Ende kronenartig ausgebildet. Die Segmente 11 bzw. die diese Segmente bildenden Ausnehmungen 10 sind weiterhin so angeordnet und ausgebildet, daß bei in Arbeitsstellung befindlichen Spreizarmen 5 zwischen zwei benachbarten Spreizarmen jeweils ein Segment 11 Platz findet und die Spreizarme 5 mit dem oberen Ende ihrer Längen 5' jeweils in einer Ausnehmung 10 Platz finden bzw. mit den am oberen Ende gebildeten äußeren Umfangsflächen geringfügig über die von der Außenfläche der Segmente 11 gebildeten zweiten Anlagefläche geringfügig radial nach außen vorstehen können, wenn, wie in der Fig. 5 dargestellt, die beiden Werkzeuge mit ihren Achsen A bzw. B achsgleich angeordnet sind und relativ zueinander in die Übergabeposition bewegt sind.

Auf der Umfangsfläche des Aufnahmeelementes 9 ist ein hülsenartig ausgebildeter Schieber 12 angeordnet, der mit seiner dem unteren Ende des Aufnahmeelementes 9 benachbart liegenden Stirnseite eine weitere Anlagefläche 13 bildet, die im übrigen derart abgeschrägt bzw. kegelstumpfartig derart ausgebildet sind, daß der radial innenliegende Bereich dieser Anlagefläche 13 im unteren Ende näherliegt als der radial außenliegende Bereich. Mit dem Schieber 12, dessen Anlagefläche 13 in Ruhestellung des Schiebers 12 mit Abstand von unterem Ende des Aufnahmelementes 9 angeordnet ist und der aus dieser Ruhestellung nach unten zumindest soweit verschiebbar ist, daß die Anlagefläche 13 niveaugleich mit dem unteren Ende des Aufnahmeelementes 9 liegt, kann der an den Segmenten 11 gehaltende O-Ring 2 auf das Werkstück bzw. auf die Welle 1 aufgeschoben werden, wie dies nachfolgend noch näher erläutert wird, wobei durch die Abschrägung der Anlagefläche 13 verhindert wird, daß sich der O-Ring 2 beim Aufschieben auf das Werkstück bzw. auf die Welle 1 verdreht bzw. auf dem Werkstück abrollt.

Bei der in der Fig. 8 in Detail dargestellten Ausführungsform der Vorrichtung ist das rohrartige Aufnahmeelement 9 von dem unteren, mit einer Sackbohrung 14 versehenen Ende einer Stange 15 mit kreisförmigen Querschnitt gebildet.

Das Aufbringen eines O-Ringes 2 auf die Welle 1 erfolgt mit der in den Fig. 1 bis 7 im Prinzip dargestellten Vorrichtung in folgender Weise:

Der O-Ring 2 wird zunächst mit Hilfe einer Zuführeinrichtung in dem Bereich des Spreizwerkzeuges 3 derart gebracht, daß der O-Ring 2 mit seiner Ringfläche senkrecht zur Achse A des Spreizwerkzeuges 3 liegt, dessen Spreizarme sich in der der in der Fig. 1 dargestellten Ruhestellung befinden. Sofern der O-Ring 2 dem Spreizwerkzeug 3 nicht direkt so zugeführt wird, daß die Spreizarme 5 mit ihren am oberen Ende der Längen 5' gebildeten ersten Anlagefläche in die Öffnung des O-Ringes 2 hineinreichen, wird dies nach dem Zuführen des O-Ringes 2 in den Wirkungsbereich des Spreizwerkzeuges 3 durch eine entsprechende Bewegung dieses Werkzeuges erreicht.

Sobald die Spreizarme 5 mit den am oberen Ende ihrer Längen 5' gebildeten ersten Anlageflächen in die Öffnung des O-Ringes 2 hineinreichen bzw. dieser Ring sich an den oberen Enden der Vorsprünge 8 nach unten hin abstützt, wie dies in der Fig. 1 dargestellt ist, werden die Spreizarme 5 um ihren Gelenkstift 6 so geschwenkt, daß sich die Längen 5' bezogen auf die Achse A radial nach außen bewegen, die dies mit den Pfeilen C in der Fig. 1 angedeutet ist. Es versteht sich, daß dabei sämtliche Spreizarme gleichzeitig und im gleichen Maße radial nach außen geschwenkt werden (Pfeil C). Hierdurch wird der O-Ring 2 durch elastische Verformung schonend aufgeweitet, bis die Spreizarme 5, die in der Fig. 3 dargestellte Arbeitsstellung erreicht haben.

Das Übergabewerkzeug 4 befindet sich zwischenzeitlich in einer Stellung, in der das Aufnahmeelement 9 mit seiner Achse B achsgleich mit der Achse A liegt, das untere Ende des Aufnahmeelementes 9 jedoch noch im Abstand von dem oberen Ende der Spreizarme 5 bzw. deren Längen 5' angeordnet ist. Anschließend werden das Spreizwerkzeug 3 bzw. der die Spreizarme 5 aufweisende Teil dieses Spreizwerkzeuges sowie das Aufnahmeelement 9 zusammen mit dem auf diesen sitzenden Schieber 12 in Richtung der Achsen A bzw. B relativ zueinander so bewegt, daß jedes am unteren Ende des Aufnahmeelementes 9 gebildete Segment 11 von oben her in den Zwischenraum zweier Längen 5' der in Arbeitsstellung befindlichen Spreizarme 5 eintritt bzw. in umgekehrter Weise jede Länge 5' der in Arbeitsstellung befindlichen Spreizarme 5 von unten her in eine Ausnehmung 10 des Aufnahmeelementes 9 eintritt. Da die von den Außenflächen der Längen 5' gebildete ersten Anlageflächen, die gegen die der O-Ring 2 anliegen, bei in Arbeitsstellung bzw. auseinandergespreizten Spreizarmen 5 auf einer Kreislinie angeordenet sind, die einen geringfügig größeren Durchmesser aufweist als der Außendurchmesser des Aufnahmeelementes 9, wird der gespreizte O-Ring über die Segmente 11 bzw. die von diesen Segmenten gebildeten zweiten Anlageflächen geschoben. Diese auch als Übergabesituation bezeichnete Situation bzw. Position der Werkzeuge 3 und 4 ist in der Fig. 5 dargestellt. Anschließend werden die Spreizarme 5 entgegen den Pfeilen C in ihre Ruhestellung zurückgeschwenkt, so daß der O-Ring 2 mit seiner Innenfläche gegen die Außenflächen der Segmente 11 bzw. gegen die von diesen Außenflächen gebildeten zweiten Anlageflächen im Bereich des unteren Endes des Aufnahmeelementes 9 anliegt. Das Spreizwerkzeug 3 sowie das Übergabewerkzeug 4 werden dann in Richtung der Achsen A bzw. B relativ zueinander auseinanderbewegt. Anschließend wird durch eine Schwenk-oder Drehbewegung mit darauffolgender Bewegung in Richtung des Pfeiles B das Aufnahmeelement 9 zusammen mit dem Schieber 12 und mit den am unteren Ende des Aufnahmeelementes gehaltenen, gespreizten O-Ring auf die Welle 1 aufgeschoben, so daß das untere Ende des Aufnahmeelementes 9 unmittelbar angrenzend an die in der Welle 1 vorgesehene Nut liegt, in welche der O-Ring 2 eingebracht werden soll. Nun wird der Schieber 12 in Richtung der Achse B relativ zum Aufnahmeelement 9 auf das untere Ende des Aufnahmeelements 9 zubewegt, wodurch mit Hilfe der Anlagefläche 13 der O-Ring 2 von den Segmenten 11 in die am Umfang der Welle 1 vorgesehene Nut geschoben wird und dort durch elastische Rückverformung des Materials fest auf der Welle 1 sitzt. Diese Situation ist in der Fig. 7 dargestellt.

Die in ihrem Aufbau und ihrer Funktion im Prinzip im Zusammenhang mit den Fig. 1 bis 7 beschriebene Vorrichtung gestattet ein sehr - schonendes Aufbringen des O-Ringes 2 auf die Welle 1 in völlig mechanisierter Weise, insbesondere auch ohne die Gefahr eines Überdehnens des O-Ringes 2 sowie ohne die Gefahr, daß sich der O-Ring 2 beim Aufbringen auf die Welle 1 an deren Umfangsfläche abrollt und damit in ungewünschter Weise verdreht bzw. verdrillt in der Nut der Welle 1 sitzt. Beides würde die einwandfreie Funktion des O-Ringes beispielsweise als Dichtung wesentlich beeinträchtigen.

Wesentlich bei der beschriebenen Vorrichtung ist vor allem auch, daß die Übergabe des gedehnten O-Ringes 2 von dem Spreizwerkzeug 3 an das Übergabewerkzeug 4 schonend erfolgt, und daß durch die rohrartige Ausbildung des Aufnahmeelementes 9 dieses soweit auf die Welle 1 aufgeschoben werden kann, daß der am äußersten unteren Ende des Aufnahmeelementes 9 bzw. der Segmente 11 sitzende O-Ring 2 mit Hilfe der ein Abwälzen dieses Ringes an den Segmenten 11 verhindernden schrägen Anlagefläche 13 nur um einen ganz geringen Betrag verschoben werden muß, um in die unmittelbar am freien Ende der Segmente 11 liegende ringförmige Nut der Welle 1 zu gelangen bzw. zu springen.

Die Vorrichtung ist mehr im Detail in der Fig. 8 dargestellt. In dieser Fig. ist 16 das eine Ende eines sich in horizontaler Richtung erstreckenden Tragarmes, der in vertikaler Richtung, d.h. in Richtung parallel zur Achse B des von dem unteren Ende der Stange 15 gebildeten Aufnahmeelementes 9 auf-und abbewegbar ist, wie dies durch den Doppelpfeil D angedeutet ist. An dem Ende 16 ist eine Platine 17 befestigt, die einerseits eine pneumatisch betätigbare Kolben-Zylindereinrichtung 18 und andererseits fest die Stange 15 trägt.

Das Spreizwerkzeug 3 besteht im wesentlichen aus einem aus mehreren Elementen 19, 20 und 21 zusammengesetzten Vorrichtungsteil, von denen das Element 19 als hülsenartiger Körper mit einem sich zum unteren Ende hin verengenden Querschnitt ausgebildet ist, in welchem das Tragelement 7 in Richtung der Achse A verschiebbar angeordnet ist. Das Tragelement 7 besteht bei dieser Ausführungsform aus mehreren, an der Oberseite an einer Platte 22 befestigten Segmenten 7' wobei jeweils zwischen zwei Segmenten 7' ein Spreizarm 5 mit Hilfe des Gelenkstiftes 6 - schwenkbar gelagert ist. An den unteren Enden der unterhalb der Gelenkstifte 6 vorgesehenen Längen 5" ist an jedem Spreizarm 5 jeweils eine Rolle 23 vorgesehen, die gegen die Innenfläche des als Hülse ausgebildeten Elementes 9 anliegt. Weiterhin ist jedem Spreizarm 5 eine Druckfeder 24 zugeordnet, die mit einem Ende auf die untere Länge 5" des betreffenden Spreizarmes 5 einwirkt und diesen in seine Ruhestellung (Fig. 1) vorspannt. Sämtliche Druckfedern 24 stützen sich mit dem anderen Ende im mittleren Bereich des Tragelementes 7 ab. Über eine Kupplungsstange 25, deren Achse achsgleich mit der Achse A des Spreizwerkzeuges 3 liegt, ist das Tragelement 7 mit dem Kolben einer pneumatisch betätigbaren Kolben-Zylinder-Einrichtung 26 verbunden, die an dem unteren Ende des als abgewinkelter Arm ausgebildeten Elementes 21 gehalten ist. Mit Hilfe der Kolben-Zylinder-Einheit kann somit das Tragelement 7 relativ zu dem als Hülse ausgebildeten Element 19 in Richtung der Achse A hin-und herverschoben werden, wie dies mit dem Doppelpfeil E angedeutet ist, wobei bei einem Verschieben des Tragelementes 7 nach unten die Rollen 23 mit der Innenfläche des im Querschnitt verengten Abschnittes des Elementes 19 zur Anlage kommen und dadurch die Spreizarme 5 bzw. deren oberen Längen 5' gegen die Wirkung der Druckfedern 24 in ihre Arbeitsstellung radial nach außen - schwenken. Diese Arbeitsstellung ist dann erreicht, wenn die Platte 22, die in ihrem mittleren Bereich eine Öffnung aufweist, durch die die oberen Enden der Spreizarme 5 nach außen vorstehen, mit ihrer Unterseite gegen den oberen Rand des als Hülse ausgebildeten Elementes 19 anliegt. Beim Nach-Oben-Verschieben des Tragelementes 7 mit Hilfe der Kolben-Zylinder-Einheit 26 liegen die Rollen 23 schließlich gegen die Innenfläche des Bereichs des Elementes 19 mit dem größeren Innenquerschnitt an, wodurch die Spreizarme 3 durch die Druckfedern 24 in ihre Ruhestellung geschwenkt sind.

Die auf das Werkstück bzw. auf die Welle 1 aufzubringenden O-Ringe 2 werden bei der in der Fig. 8 dargestellten Ausführungsform über eine als Linearförderer ausgebildete Fördereinrichtung 27 zugeführt, wobei jeweils der am Ende dieser Fördereinrichtung 27 in Förderrichtung erste O-Ring 2 auf die oberen Enden der Längen 5' der in Ruhestellung befindlichen Spreizarme 5 aufgesetzt bzw. aufgebracht wird. Dies kann entweder mit Hilfe einer in der Fig. 8 näher dargestellten Greif- bzw. Übertragungseinrichtung erfolgen, oder beispielsweise dadurch erfolgen, daß das gesamte Spreizwerkzeug 3 am Maschinengestell 28 in horizontaler Richtung und in vertikaler Richtung bewegbar geführt ist, wie dies durch die Doppelpfeile F bzw. G andeutet ist, so daß bei in Ruhestellung befindlichen bzw. mit dem oberen Ende der Längen 5' nach innen geschwenkten Spreizarmen 5 nach entsprechender Absenkung (in vertikaler Richtung) und entsprechender Verschiebung in horizontaler Richtung die oberen Enden der Längen 5' der Spreizarme 5 in den ersten, am Ende der Fördereinrichtung 27 bereitstehenden O-Ring von unten her eingeführt werden können. Anschließend wird das gesamte Spreizwerkzeug 3 in die in der Fig. 8 dargestellten Stellung zurückbewegt, wobei gleichzeitig oder anschließend das Tragelement 7 zum Spreizen des von den Spreizarmen 5 aufgenommenen O-Ringes relativ zum Element 19 nach unten bewegt wird. Anschließend wird das Übergabewerkzeug 4 in Richtung des Pfeiles D nach unten abgesenkt, so daß sich die am unteren Ende des Aufnahmeelementes 9 gebildeten Segmente 11 in der oben bereits beschriebenen Weise in die zwischen den oberen Längen 5' der in Arbeitsstellung befindlichen Spreizarme 5 gebildeten Zwischenräume und damit auch in die Öffnungen des gespreizten O-Ringes 2 einschieben. Um schließlich den am Aufnahmeelement 9 gehaltenen gespreizten O-Ring 2 auf das Werkstück bzw. die Welle 1 aufbringen zu können, ist der das Ende 16 aufweisende Arm zusammen mit dem Übergabewerkzeug 4 beispielsweise um eine vertikale Achse in eine Stellung schwenkbar, in der sich das Aufnahmeelement 9 über dem dann achsgleich mit der Achse B liegenden Werkstück (Welle 1) befindet, so daß zunächst durch Absenken des gesamten Übergabewerkzeuges 4 bzw. durch Aufschieben des Aufnahmeelementes 9 auf die Welle 1 und anschließendes Vorschieben des Schiebers 12 (durch Betätigen der Kolben-Zylinder-Einrichtung 18) der O-Ring in der oben bereits beschriebenen Weise in die Nut der Welle 1 eingebracht wird.

Selbstverständlich ist es möglich, das Aufbringen der O-Ringe 2 auf das Spreizwerkzeug sowie die für die Übergabe der gespreizten O-Ringe von dem Spreizwerkzeug 3 an das Übergabewerkzeug 4 und von diesem an das Werkstück (Welle 1) notwendigen Relativbewegungen auch auf andere Weise, als beschrieben, zu realisieren. Wie dies im einzelnen realisiert wird, hängt im wesentlichen von der Arbeitsweise bzw. Konstruktion einer Gesamtvorrichtung (Montageautomaten) ab, in welcher - (Gesamtvorrichtung) die Vorrichtung zum Aufbringen von O-Ringen auf Werkstücke verwendet werden soll.

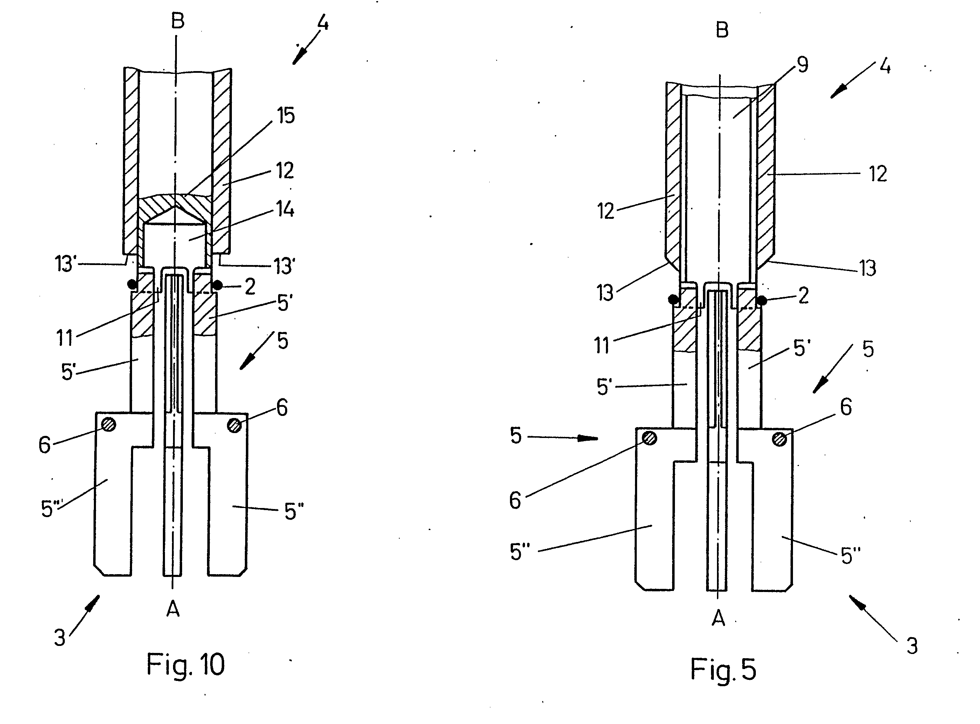

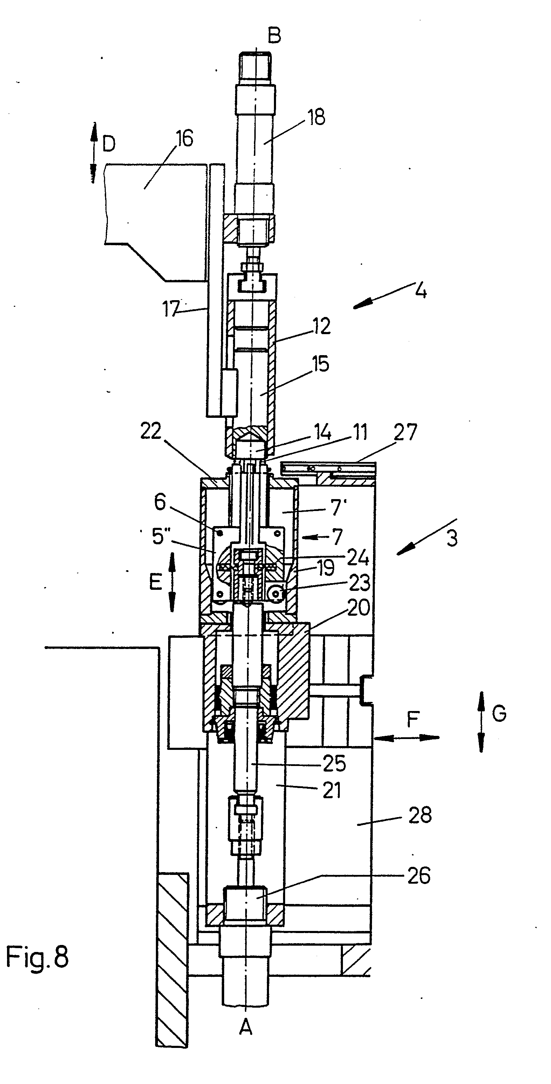

Bei der in der Fig. 10 dargestellten Ausführungsform weist der Schieber 12 eine ringförmige Anlagefläche 13' auf, die im Gegensatz zur Anlagefläche 13 nicht abgeschrägt ist, sondern in einer Ebene senkrecht zur Achse B liegt. Diese Ausbildung ist dann möglich, wenn bei entsprechender Oberflächenbeschaffenheit des Werkstückes ein Abrollen des O-Ringes 2 bei dem Aufschieben auf das Werkstück nicht zu befürchten ist.

## Ansprüche

1. Vorrichtung zum Aufbringen von O-Ringen auf Werkstücke, insbesondere auf zylindrische Werkstücke, bei der (Vorrichtung) die O-Ringe über eine Zuführung mit ihrer Ringfläche in einer definierten Ebene liegend zugeführt werden, dadurch gekennzeichnet, daß die Vorrichtung ein Spreizwerkzeug (3) aufweist, welches wenigstens drei Spreizelemente (5) besitzt, die jeweils eine erste Anlagefläche (5') für die Innenfläche eines O-Ringes (2) bilden, daß die ersten Anlageflächen (5') um eine erste, senkrecht zu der Ebene verlaufende Achse (A) verteilt angeordnet sind und aus einer Ruhestellung mit geringerem Abstand von dieser Achse (A) in eine Arbeitsstellung mit größerem Abstand von dieser Achse (A) radial nach außen bewegbar sind, daß ein Übergabewerkzeug (4) mit einem Aufnahmeelement (9) vorgesehen ist, welches an einem Ende um eine zweite Achse (B) verteilt angeordnete Segmente aufweist, die jeweils als Wandabschnitt eines Hohlzylinders ausgebildet sind und an ihrer Außenfläche eine zweite Anlagefläche für die Innenfläche eines O-Ringes (2) bilden, daß jeweils zwischen zwei benachbarten Segmenten (11) eine zu dem Ende des Aufnahmeelementes (9) hin offene Ausnehmung (10) vorgesehen ist, daß das Spreizwerkzeug (3) und das Übergabewerkzeug (4) aus einer ersten Position, in der die erste sowie zweite Achse (A, B) achsgleich miteinander liegen, in Richtung dieser Achsen (A, B) relativ zueinander in eine zweite Position bewegbar sind, in der jedes Segment (11) des Aufnahmeelementes (9) in den zwischen zwei benachbarten ersten Anlageflächen (5') der in Arbeitsstellung befindlichen Spreizelemente (5) gebildeten Zwischenraum angeordnet ist, und daß auf der Außenfläche des Aufnahmeelementes (9) ein eine dritte, seitliche Anlagefläche (13) für einen O-Ring - (2) bildender Schieber (12) verschiebbar angeordnet ist.

2. Vorrichtung nach Anspruch 1, dadurch gekennzeichnet, daß die dritte Anlagefläche (13) quer zur zweiten Achse (B) verläuft.

3. Vorrichtung nach Anspruch 1 oder 2, dadurch gekennzeichnet, daß das Aufnahmeelement (9) von einem Rohrstück oder rohrartig ausgebildeten Element gebildet ist, welches an dem einen Ende mit den zu diesem Ende hin offenen Ausnehmungen (10) versehen ist.

4. Vorrichtung nach einem der Ansprüche 1 bis 3, dadurch gekennzeichnet, daß die Ausnehmungen (10) des Aufnahmeelementes (9) schlitzförmig ausgebildet sind.

5. Vorrichtung nach einem der Ansprüche 1 bis 4, dadurch gekennzeichnet, daß die Anzahl der Ausnehmungen (10) des Aufnahmeelementes (9) gleich der Anzahl der von den Spreizelementen (5) gebildeten ersten Anlageflächen (5') ist.

6. Vorrichtung nach einem der Ansprüche 1 bis 5, dadurch gekennzeichnet, daß das Aufnahmeelement (9) auf das Werkstück (1) aufschiebbar ist.

7. Vorrichtung nach einem der Ansprüche 1 bis 6, dadurch gekennzeichnet, daß die Spreizelemente Spreizarme (5) sind, die an einem Tragelement (7) jeweils um eine Achse schwenkbar gelagert sind, die senkrecht zur ersten Achse (A) sowie senkrecht zu einer radial zu dieser ersten Achse verlaufenden Linie angeordnet ist.

8. Vorrichtung nach Anspruch 7, dadurch gekennzeichnet, daß die Spreizarme (5) jeweils als doppelarmige Hebel ausgebildet sind, die an dem Ende einer Länge (5') mit ihrer Außenfläche die erste Anlagefläche bilden.

9. Vorrichtung nach Anspruch 8, dadurch gekennzeichnet, daß die Spreizarme (5) mit ihrer anderen Länge zum Schwenken mit einem mit einer Steuerkurve versehenen Element (19) zusammenwirken.

10. Vorrichtung nach Anspruch 9, dadurch gekennzeichnet, daß das die Steuerkurve bildende Element (19) eine Hülse ist, in der das Tragelement (7) verschiebbar angeordnet ist und die einen Bereich mit größerem Innenquerschnitt und einen Bereich mit kleinerem Innenquerschnitt aufweisen.

11. Vorrichtung nach einem der Ansprüche 1 bis 10, dadurch gekennzeichnet, daß die dritte Anlagefläche (13) als über die Außenfläche des Aufnahmeelementes (9) radial nach außen wegstehende Ringfläche, vorzugsweise als Kegelfläche in der Weise ausgebildet ist, daß der radial innenliegende Bereich dieser Fläche dem Ende des Aufnahmeelementes (9) näherliegt als der radial außenliegende Bereich.

12. Vorrichtung nach einem der Ansprüche 1 bis 11, dadurch gekennzeichnet, daß das Aufnahmeelement an seinem Ende kronenartig ausgebildet ist.

Fig.1

Fig.3

Fig.7

0 210 549

Fig. 2

Fig. 4

Fig. 6

Fig. 9

0 210 549

Fig. 10

Fig. 5

Fig.8